## Europäisches Patentamt
## European Patent Office
## Office européen des brevets

(19)

(11) Veröffentlichungsnummer : **0 020 318**
**B1**

# (12) EUROPÄISCHE PATENTSCHRIFT

(45) Veröffentlichungstag der Patentschrift :
22.09.82

(51) Int. Cl.³ : **B 23 K 11/32**, B 23 K 11/30

(21) Anmeldenummer : **80890058.3**

(22) Anmeldetag : **22.05.80**

(54) **Vorrichtung zum Herstellen geschweisster Gitter aus einander kreuzenden Metalldrähten mit Hilfe der elektrischen Widerstandsschweissmethode.**

(30) Priorität : **29.05.79 AT 3903/79**

(43) Veröffentlichungstag der Anmeldung :
**10.12.80 (Patentblatt 80/25)**

(45) Bekanntmachung des Hinweises auf die Patenterteilung : **22.09.82 Patentblatt 82/38**

(84) Benannte Vertragsstaaten :
**BE CH DE FR GB IT LI NL**

(56) Entgegenhaltungen :
**US A 2 001 688**
**US A 3 463 895**

(73) Patentinhaber : **EVG Entwicklungs- u. Verwertungs-Gesellschaft m.b.H.**
**Vinzenz-Muchitsch-Strasse 36**
**A-8011 Graz (AT)**

(72) Erfinder : **Schmidt, Gerhard, Dipl.-Ing.**
**Rosengasse 7**
**A-8042 Graz (AT)**
Erfinder : **Ritter, Klaus, Dipl.-Ing.**
**Peterstalstrasse 157**
**A-8042 Graz (AT)**
Erfinder : **Ritter, Gerhard, Dr. Dipl.-Ing.**
**Unterer Plattenweg 47**
**A-8043 Graz (AT)**
Erfinder : **Gött, Hans, Dipl.-Ing-.**
**Petersbergenstrasse 69**
**A-8055 Graz (AT)**
Erfinder : **Ritter, Josef, Dr. Dipl.-Ing.**
**Stenggstrasse 33**
**A-8043 Graz (AT)**

(74) Vertreter : **Holzer, Walter, Dipl.-Ing. Patentanwälte et al**
**Dipl.-Ing. Dr.techn. Schütz Alfred Dipl.-Ing. Dr.techn. Pfeifer Rudolf Dr.phil. Mrazek Engelbert Dipl.-Ing. Holzer Walter Dipl.-Ing. Pfeifer Otto Fleischmanngasse 9**
**A-1040 Wien (AT)**

# Vorrichtung zum Herstellen geschweißter Gitter aus einander kreuzenden Metalldrähten mit Hilfe der elektrischen Widerstandsschweißmethode

Die Erfindung betrifft eine Vorrichtung zum Herstellen geschweißter Gitter aus einander kreuzenden Metalldrähten mit Hilfe der elektrischen Widerstandsschweißmethode, bei welcher die Gitterdrähte zwischen Reihen zusammenwirkender, gekühlter Elektroden hindurchgeführt und an den Drahtkreuzungspunkten unter Druck durch einen elektrischen Stromstoß miteinander verschweißt werden.

Das für den Schweißvorgang notwendige Zusammenwirken von Hitze und Druck führt zu einer raschen Abnutzung der Elektroden, weshalb diese zur Sicherung von einwandfreien Schweißungen häufig ausgewechselt oder nachgeschliffen werden müssen. Zur Erhöhung der Standzeit der Elektroden kann auch eine Kühlung mit Hilfe eines in die Halterungen der Elektroden eingebaute Kühlmittelzirkulationsleitungen durchströmenden Kühlmittels vorgenommen werden (vgl. CH-A-390 405 und US-A-3 463 895). Besonders bei der Herstellung engmaschiger Gitter, bei welcher Elektroden mit kleinem Querschnitt angewendet werden müssen, die nur enge innere Kühlmittelzirkulationsleitungen zulassen, bereitet es aber Schwierigkeiten, die Kühlung so wirksam zu machen, daß eine angemessene Standzeit der Elektroden erzielt wird.

Ein weiterer, bei der herkömmlichen Gitterschweißung auftretender Mangel kann hingegen bisher praktisch nicht wesentlich vermindert oder gar behoben werden. Das für das Schweißen notwendige Erhitzen bringt nämlich für das Gitter selbst den Nachteil mit sich, daß es trotz sorgsamen Richtens der zu verschweißenden Drähte vor dem Schweißvorgang nach dem Schweißen uneben wird, weil die örtliche und einseitige Erhitzung der Gitterdrähte während des Schweißvorganges zu einem Verbiegen der Gitterdrähte und dadurch zu einem Verwerfen des Gitters bei dessen Abkühlung führt.

Besonders stark treten diese Erscheinungen bei engmaschigen Gittern und bei Gittern mit tief ineinander eingeschweißten Drähten auf, weil bei derartigen Gittern die zugeführte Wärmemenge, bezogen auf die erhitzte Drahtmasse, besonders groß ist.

Es ist ferner bereits bekannt, bei Schweißungen nach der elektrischen Widerstandsmethode die in einer Schweißelektrode strömende Kühlflüssigkeit aus der Elektrode austreten zu lassen, sie in einem Luftstrom zu zerstäuben und die zerstäubte Flüssigkeit entlang der Elektrode gegen das Schweißgut zu richten (US-A-2 001 688), sowie einen störenden Luftzutritt zur Schweißstelle dadurch zu verhindern, daß die Schweißung in einem Flüssigkeitsbad vorgenommen oder die Schweißstelle einem Flüssigkeitsstrom ausgesetzt wird (AT-A-65 888).

Durch bisher nicht in Betracht gezogene Anwendung solcher Kühlmethoden bei der Gitterschweißung kann die Standzeit der Elektroden erhöht und die Gefahr des Verwerfens der Gitter vermindert werden. Die Erfindung befaßt sich deshalb mit der Aufgabe, eine zum Herstellen geschweißter Gitter dienende Vorrichtung der einleitend angegebenen Gattung so auszubilden, daß die Schweißungen an den Drahtkreuzungspunkten trotz der erforderlichen Vorschubbewegung der anfallenden, meist sehr langen Gitterbahn in einem Flüssigkeitsbad erfolgen können, um so eine besonders intensive Kühlwirkung zu erzielen.

Bei einer erfindungsgemäßen Vorrichtung ist zur Ermöglichung einer Schweißung in einem Flüssigkeitsbad unterhalb des Schweißbereiches der Elektroden ein nach oben offener Auffangtank für ein flüssiges Kühlmittel vorgesehen, dessen Oberkanten tiefer als die Zuführungsebene der Längsdrähte des Gitters zu den Elektroden liegen, und in dem Auffangtank ist ein zweiter Tank angeordnet, dessen Oberkanten oberhalb von Führungen für die Längsdrähte des Gitters liegen und in dessen Seitenwänden Durchbrüche zur Aufnahme dieser Führungen, ein Austrittschlitz für das fertige Gitter sowie gegebenenfalls eine Öffnung für das Zuführen einzelner Querdrähte zum Schweißbereich zwischen den Elektroden vorgesehen sind, und schließlich ist zwischen dem Auffangtank und dem zweiten Tank eine Verbindungsleitung mit einer Pumpte zum Fördern des Kühlmittels aus dem Auffangtank in den zweiten Tank angeordnet.

Selbstverständlich soll das flüssige Kühlmittel einen hinreichend hohen spezifischen elektrischen Widerstand aufweisen, um einen störenden Nebenschluß zwischen den Elektroden zu vermeiden. Versuche haben aber erwiesen, daß diese Forderung leicht erfüllt werden kann und insbesondere schon durch normales Leitungswasser erfüllt wird.

Einen besonderen Vorteil bietet die Anwendung der erfindungsgemäßen Vorrichtung zum Herstellen geschweißter Gitter aus verzinkten Stahldrähten, weil die beim Schweißen der verzinkten Drähte entstehenden Zink- bzw. Zinkoxiddämpfe im flüssigen Kühlmittel kondensiert und niedergeschlagen werden, wobei sie in der Flüssigkeit verbleiben, so daß eine Luftverschmutzung und Belästigung des Werkstättenpersonals vermieden werden. In den Kühlmittelkreislauf können Filter zur Entfernung der suspendierten Teilchen eingeschaltet werden.

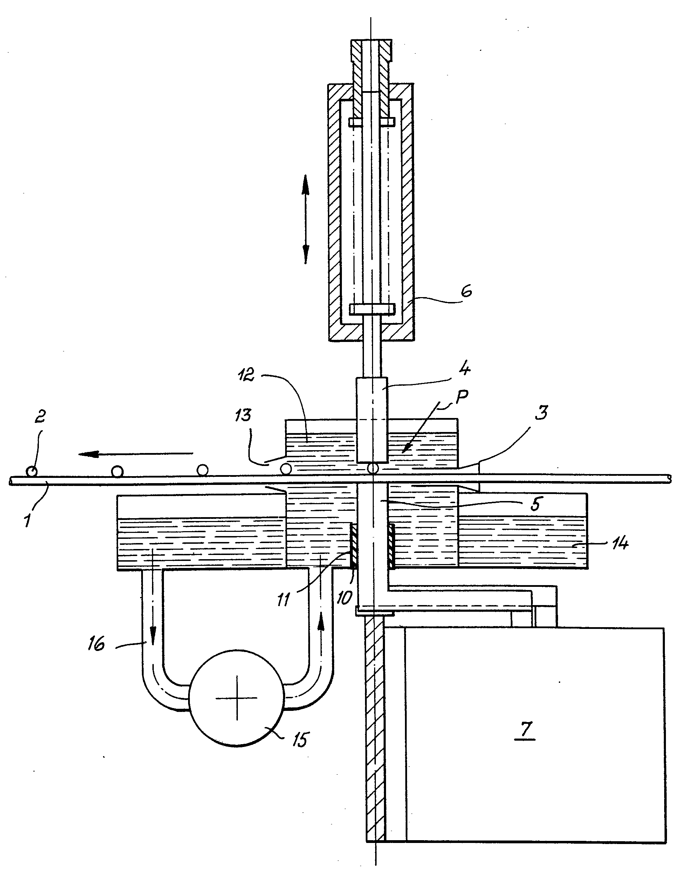

Ein Ausführungsbeispiel der Erfindung wird nun unter Bezugnahme auf die Zeichnung, die einen schematischen Längsschnitt durch die Vorrichtung zeigt, genauer beschrieben.

In der Zeichnung erkennt man eine Lage von Längsdrähten 1 und Querdrähten 2 eines geschweißten Gitters. Die Längsdrähte werden durch Führungen 3 in den in gleicher Höhe mit diesen Führungen befindlichen Schweißbereich zwischen paarweise einander zugeordneten oberen und unteren Elektroden 4 bzw. 5 geführt. In bekannter Weise sind die oberen Elektroden 4 in einem auf- und abbewegbaren Elektrodenbalken 6 federbelastet gelagert und gleitend geführt, wogegen die unteren Elektroden 5 feststehen.

Die unteren Elektroden 5 sind z.B. alternierend mit einem der beiden Sekundärleiteranschlüsse eines Transformators 7 verbunden. Die oberen Elektroden 4 sind dann paarweise leitend miteinander verbunden und bilden passive Strombrücken. Durch einen mit einer Dichtungs- und Isoliermasse 10 abgedichteten Rohrstutzen 11 ragen die feststehenden unteren Elektroden 5 in einen Kühlflüssigkeit enthaltenden Kühltank 12.

Die Längsdrähte 1 treten durch die Führungen 3 in den Kühltank 12 ein. Überdies weist der Kühltank 12 noch einen Austrittschlitz 13 für das geschweißte Gitter auf, und schließlich ist er noch mit einer in der Zeichnung nicht sichtbaren seitlichen Öffnung für das axiale Zuführen der Querdrähte zu dem im Kühltank 12 liegenden Schweißbereich zwischen den Elektroden 4 und 5 versehen. Die Querdrähte 2 können aber gegebenenfalls auch von oben im Sinne des Pfeils P an die Längsdrähte 1 herangeführt werden.

Um den Schweißbereich im Kühltank 12 bei relativ kleinem Flüssigkeitsbedarf dauernd überflutet halten zu können, ist ein den Kühltank 12 vorzugsweise allseitig umgebender Auffangtank 14 vorgesehen, in welchem die durch die verschiedenen Durchtrittsöffnungen für die Drähte bzw. für das Gitter selbst austretende Flüssigkeit, vorzugsweise Wasser, aufgefangen wird.

Eine Pumpe 15, deren Förderleistung größer als die pro Zeiteinheit aus den verschiedenen Öffnungen des Kühltanks 12 austretende Flüssigkeitsmenge sein muß, um den Flüssigkeitsspiegel im Kühltank 12 auf beliebige Höhe bringen zu können, ist in eine den Auffangtank 14 mit dem Kühltank 12 verbindende Leitung 16 eingeschaltet und pumpt die durch die verschiedenen Öffnungen des Kühltanks 12 austretende Flüssigkeit, welche im Auffangtank 14 gesammelt wird, stets wieder in den Kühltank 12 zurück und hält den Flüssigkeitsspiegel in diesem dauernd auf gleicher Höhe oberhalb der Führungen 3 und des Austrittschlitzes 13 und damit auch oberhalb des zwischen den zusammenwirkenden Elektroden 4 und 5 liegenden Schweißbereiches für das herzustellende Gitter. Der Schweißvorgang erfolgt dann in bekannter Weise, jedoch dauernd unterhalb des Flüssigkeitsspiegels im Tank 12.

Selbstverständlich können in den Zirkulationsweg des flüssigen Kühlmittels erforderlichenfalls Kühleinrichtungen eingeschaltet werden.

Auf die beschriebene Weise wird nicht nur eine äußerst wirksame und einfache Kühlung der der größten Hitze ausgesetzten Oberflächenbereiche der Elektroden erzielt, sondern es werden auch komplizierte, enge und damit bedeutend weniger wirkungsvolle Kühlmittelzirkulationsleitungen in den Elektrodenhaltern erübrigt. Da ferner das Gitter selbst unmittelbar an der Schweißstelle sehr wirkungsvoll gekühlt wird, wird die Erhitzung der Gitterdrähte auf die unmittelbare Berührungszone miteinander verbundener Drähte begrenzt und eine Fortleitung der Hitze entlang der Drähte und damit eine mehr oder weniger starke Erwärmung des gesamten Gitters vermieden. Dadurch wird einerseits die Elektrodenstandzeit erheblich verlängert und anderseits werden Verwerfungen des Gitters vermieden.

## Anspruch

Vorrichtung zum Herstellen geschweißter Gitter aus einander kreuzenden Metalldrähten mit Hilfe der elektrischen Widerstandsschweißmethode, bei welcher die Gitterdrähte zwischen Reihen zusammenwirkender, gekühlter Elektroden hindurchgeführt und an den Drahtkreuzungspunkten unter Druck durch einen elektrischen Stromstoß miteinander verschweißt werden, dadurch gekennzeichnet, daß zur Ermöglichung einer Schweißung in einem Flüssigkeitsbad unterhalb des Schweißbereiches der Elektroden (4, 5) ein nach oben offener Auffangtank (14) für ein flüssiges Kühlmittel vorgesehen ist, dessen Oberkanten tiefer als die Zuführungsebene der Längsdrähte (1) des Gitters zu den Elektroden (4, 5) liegen, daß in dem Auffangtank (14) ein zweiter Tank (12) angeordnet ist, dessen Oberkanten oberhalb von Führungen (3) für die Längsdrähte (1) des Gitters liegen und in dessen Seitenwänden Durchbrüche zur Aufnahme dieser Führungen (3), ein Austrittschlitz (13) für das fertige Gitter sowie gegebenenfalls eine Öffnung für das Zuführen einzelner Querdrähte (2) zum Schweißbereich zwischen den Elektroden (4, 5) vorgesehen sind, und daß zwischen dem Auffangtank (14) und dem zweiten Tank (12) eine Verbindungsleitung (16) mit einer Pumpe (15) zum Fördern des Kühlmittels aus dem Auffangtank (14) in den zweiten Tank (12) angeordnet ist.

## Claim

Apparatus for producing welded grids from metal wires crossing one another, by means of the electrical resistance welding method, wherein the grid wires are conducted between rows of cooperating cooled electrodes and are welded together under pressure at the wire crossing points by means of an electric surge current, characterized in that a catcher tank (14) for a liquid coolant is provided below the welding zone of the electrodes (4, 5) in order to enable welding in a liquid bath, said tank being open at the top and the upper edges of which lying lower than the feeding plane of the longitudinal grid wires (1) to the electrodes (4, 5), in that a second tank (12) is provided in the catcher tank (14), the upper edges of said second tank lying above guides (3) for the longitudinal grid wires (1) and the side walls of said second tank having openings for receiving these guides (3), an outlet slot (13) for the finished grid and optionally an opening for feeding individual transverse wires (2) to the welding zone between the electrodes (4, 5), and in that between the catcher tank (14) and the second tank (12) a connecting pipe (16) with a pump (15) is provided for delivering the coolant from the catcher tank (14) to the second tank (12).

### Revendication

Dispositif pour fabriquer du treillis soudé à partir de fils métalliques qui se croisent au moyen du procédé de soudage électrique par résistance, dans lequel les fils du treillis passent entre des rangées d'électrodes refroidies coopérantes et sont soudés l'un à l'autre à leurs points de croisement sous pression par une impulsion de courant électrique, caractérisé en ce que, pour rendre possible un soudage dans un bain de liquide en dessous de la zone de soudage des électrodes (4, 5), une cuve collectrice (14) ouverte vers le haut et destinée à un agent de refroidissement liquide est prévue, ses bords supérieurs se trouvant à un niveau inférieur à celui du plan d'amenée des fils longitudinaux (1) du treillis aux électrodes (4, 5), une deuxième cuve (12) est disposée dans la cuve collectrice (14) et ses bords supérieurs sont situés au-dessus de guides (3) pour les fils longitudinaux (1) du treillis, ses parois latérales présentant des ouvertures destinées à recevoir ces guides (3), une fente de sortie (13) pour le treillis achevé et, le cas échéant, une ouverture pour l'amenée de fils transversaux individuels (2) à la zone de soudage entre les électrodes (4, 5) sont prévues et une conduite de raccordement (16) équipée d'une pompe (15) destinée à refouler l'agent de refroidissement de la cuve collectrice (14) dans la deuxième cuve (12) est prévue entre la cuve collectrice (14) et la deuxième cuve (12).